# EUROPÄISCHE PATENTANMELDUNG

(11) **EP 1 914 147 A2**
(43) Veröffentlichungstag der Anmeldung: **23.04.2008**
(21) Anmeldenummer: 07020289.0
(22) Anmeldetag: 17.10.2007
(51) Int. Cl.: B62B 3/02, B62B 3/16

(54) **Verkaufscontainer**

(30) Priorität: 20.10.2006 DE 102006050452
(71) Anmelder: Wanzl Metallwarenfabrik GmbH, 89336 Leipheim (DE)
(72) Erfinder: Buchmann Gerhard, 89362 Offignen (DE); Knupfer, Robert, 89171 Illerkirchberg (DE)

(57) **Zusammenfassung**

Die Erfindung betrifft einen fahrbaren Verkaufscontainer mit einem Boden (3) und mit Seitenteilen (5, 6), wobei ein erstes (5) und ein zweites Seitenteil (6) vorgesehen ist und wobei beide Seitenteile (5, 6) gegenüber voneinander angeordnet sind.

Die Erfindung zeichnet sich dadurch aus, dass der Verkaufscontainer (1) für den Nichtgebrauch Platz sparend zusammenklappbar ist.

## Beschreibung

Die Erfindung betrifft einen Verkaufscontainer mit den Merkmalen im Oberbegriff des Hauptanspruchs.

Verkaufscontainer dieser Art werden zum Darbieten von Ware in Selbstbedienungsläden, Tankstellen oder anderen Geschäften verwendet. Die Fahrbarkeit eines solchen Containers bietet die Möglichkeit, diesen auch während des Transports der Ware z.B. im LKW einzusetzen.

Aus der holländischen Patentschrift NL 1027500 ist beispielsweise ein Transportcontainer bekannt, der Seitenwände aufweist und auf dem Boden eine Anzahl von Behältern oder Gegenständen, wie beispielsweise Blumenbehälter, vorsieht. Es ist eine Einhängeetage vorgesehen, auf der weitere Behälter oder andere Gegenstände abgestellt werden können.

Ein solcher Container weist jedoch meist drei oder vier Seitenwände auf. Werden mehrere solcher Container in beladenem oder nicht beladenem Zustand transportiert, ist der Platzaufwand z.B. in einem LKW sehr groß.

Die Aufgabe der Erfindung besteht daher darin, einen besseren Verkaufscontainer aufzuzeigen.

Die Erfindung löst die Aufgabe mit den Merkmalen im Hauptanspruch.

Durch die Klappbarkeit ist der Platzbedarf z.B. während des Transportes von nicht beladenen Containern sehr gering. Weiterhin bietet die Stapelbarkeit gleicher Container im zusammengeklappten Zustand eine weitere Reduzierung des Platzbedarfs.

Ein solcher Container ist aber auch im beladenen Zustand stapelbar, so dass auch im beladenen Zustand eine Reduzierung des Platzbedarfes erfolgt.

Der Materialaufwand und dadurch auch die Masse sind darüber hinaus durch eine solche konstruktive Lösung sehr gering. Auch in beladenem Zustand lässt sich dadurch ein solcher Container besser fahren und lenken.

Die Erfindung wird anhand eines Ausführungsbeispieles näher erläutert.
Es zeigt
- Fig. 1: einen Verkaufscontainer in vergrößerter 3-D-Darstellung;
- Fig. 2: einen Verkaufscontainer gestapelt auf einem weiteren gleichen Verkaufscontainer in 3-D-Ansicht;
- Fig. 3: den gleichen Verkaufscontainer in 3-D-Ansicht;
- Fig. 4: den gleichen Verkaufscontainer mit heruntergeklappten Seitenteilen in 3-D-Ansicht;
- Fig. 5: den gleichen Verkaufscontainer in zusammengeklapptem Zustand in 3-D-Ansicht sowie
- Fig. 6: ein zusammengeklappter Verkaufscontainer gestapelt auf einem weiteren gleichen Verkaufscontainer in 3-D-Ansicht.

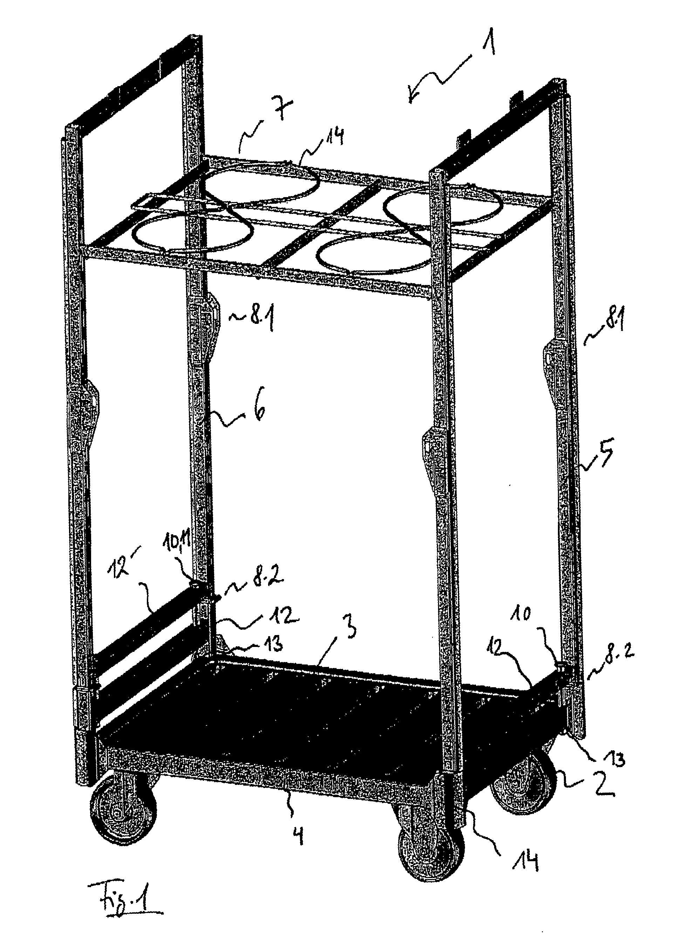

Die Fig. 1 zeigt einen Verkaufscontainer 1 mit zwei Seitenteilen 5, 6, einem ersten Seitenteil 5 und einem zweiten Seitenteil 6, die gegenüber von einander an einem Rahmen 4 des Verkaufscontainers 1 angeordnet sind. Der Verkaufscontainer 1 ist fahrbar. Hierfür ist der Rahmen 4 des Verkaufscontainers 1 mit Rollen 2 ausgestattet. Die Rollen 2 sind an jeder Ecke des Rahmens 4 ortsfest angeordnet. Der Rahmen 4 dient weiterhin zur Aufnahme eines Bodens 3. Der Boden 3 kann wechselbar oder ortsfest am Rahmen 4 angeordnet sein. Das Material des Bodens 3 ist frei wählbar, es hat sich als vorteilhaft erwiesen, einen Kunststoff zu verwenden. Vorzugsweise ist der Boden 3 mit Schlitzen oder Löchern oder ähnlichem versehen.

Die Seitenteile 5, 6 sind vorzugsweise aus einem Bauteil gebildet, dass im Inneren hohl ausgeführt ist. Wie im Beispiel dargestellt, bietet es sich an, jedes Seitenteil 5, 6 aus einem Vierkantstahl herzustellen. Aber auch andere Querschnitte wie eine runde Ausführung oder ein zum Teil offener Querschnitt sind für die Verwendung als Seitenteil 5, 6 denkbar.

Die Innenseite der Seitenteile 5, 6 ist mit Öffnungen versehen, die für die Aufnahme von wenigstens einer Verkaufsetage 7 vorgesehen sind. Als Öffnungen haben sich Schlitze, wie auch in Fig. 1 zeigt, als vorteilhaft erwiesen.

Jedes Seitenteil 5, 6 kann, wenn notwendig, verstärkt sein. Auch ist denkbar, optische Blenden am Seitenteil 5, 6 anzubringen. Weiterhin ist es zweckmäßig, einen solchen Verkaufscontainer 1 mit weiteren Zubehörteilen wie z.B. Preisauszeichnungen, Sicherheitshinweisen oder anderen Kennzeichen auszustatten. Ein solches Zubehörteil ist dann an den Seitenteilen 5, 6, dem Rahmen 4 oder wenn möglich, dem Boden 3 vorzusehen.

Die Etage 7 kann verschieden ausgeführt sein. Sie kann vollflächig gebildet sein, oder, wie im dargestellten Beispiel, ein Drahtgitter aufweisen, dass mit Aufnahmen 14, z.B. aus Kunststoff elastisch für die Aufnahme verschiedener, vorzugsweise nicht näher dargestellter runder Behälter, verwendbar ist. Die Anzahl solcher Aufnahmen 14 ist beliebig und richtet sich nach der Größe der Behälter.
Die Seitenteile 5, 6 sind ortsfest mit dem Rahmen 4 verbunden und um 180° klappbar. Hiefür weisen sie wenigstens einen Klappmechanismus 8 auf. Vorzugsweise weist jedes Seitenteil 5, 6 zwei Klappmechanismen 8.1, 8.2 auf. Als Klappmechanismus 8 kann beispielsweise ein Scharnier 9 verwendet werden.

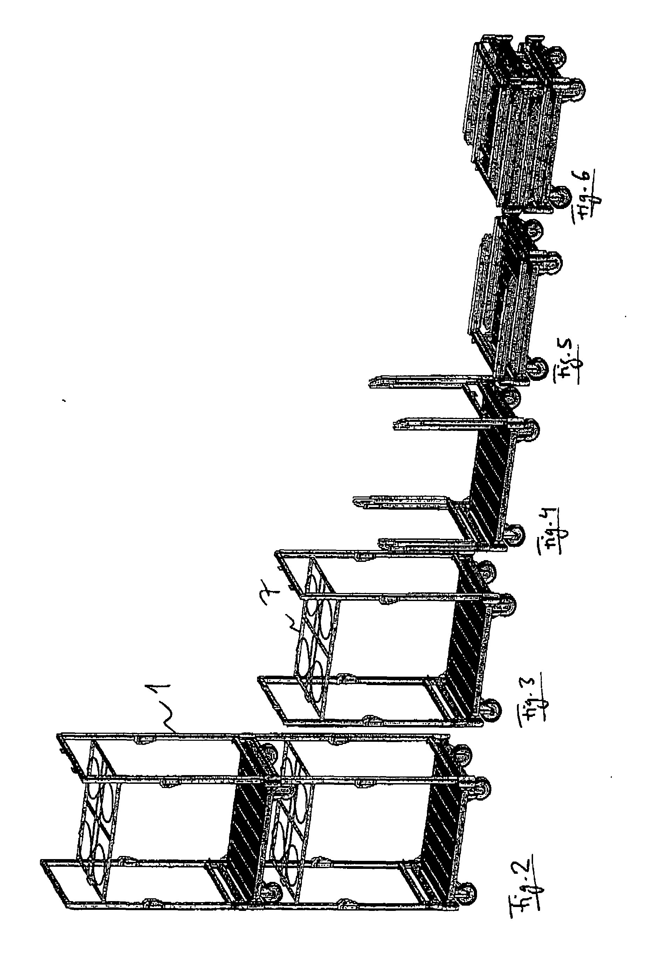

Ein erster Klappmechanismus 8.1 ist ungefähr in der Mitte der Höhe eines Seitenteiles 5, 6 vorgesehen. Das obere Teil des Seitenteils 5, 6 wird in Richtung Boden 3 geklappt. Dies ist in Fig. 4 dargestellt. Vorzugsweise ist der erste Klappmechanismus 8.1 bei beiden Seitenteilen 5, 6 auf gleicher Höhe angeordnet. Es wird ein Abstand zum Boden 3 eingehalten. Dieser ist notwendig, um einen zweiten Klappmechanismus 8.2 realisieren zu können. Ein jeweils zweiter Klappmechanismus 8.2 ist bei beiden Seitenteilen 5, 6 auf unterschiedlicher Höhe angeordnet. Die Höhen sind derart gewählt, dass das erste Seitenteil 5 auf dem Boden 3 und das zweite Seitenteil 6 auf dem ersten Seitenteil 5 aufliegen kann. Fig. 5 verdeutlicht in welcher Weise beide Seitenteile 5, 6 übereinander liegen. Jedes Seitenteil 5, 6 ist somit, wie beschrieben, im zusammengeklappten Zustand zweimal um 180° geklappt und weist hierfür vorzugsweise zwei Scharniere 9 auf.

Der Klappmechanismus 8.2 des zweiten Seitenteils 6 muss somit höher angeordnet sein, als der Klappmechanismus 8.2 des ersten Seitenteils 5. Dies ist in der vergrößerten Darstellung in Fig. 1 ersichtlich.

Zur Sicherung des zweiten Klappmechanismus 8.2 sind Sicherungsmittel 10 wie Bolzen, Stifte oder Gewindestäbe vorgesehen.

In den beispielhaften Figuren sind Bolzen 10 dargestellt. Jedes Seitenteil 5, 6 weist zur Aufnahme der Bolzen 10 eine Querstrebe 12 auf. Das zweite Seitenteil 6 weist, da der zweite Klappmechanismus 8.2 höher angeordnet ist, eine weitere Querstrebe 12' auf. Der Rahmen 4 sieht eine Öffnung 13 vor, in der jeder Bolzen 10 aufgenommen werden kann. Wie aus Fig. 1 ersichtlich, lagern die Bolzen 10 des ersten Seitenteils 5 sowohl in einer Ausnehmung 11 der Querstrebe 12, als auch in der Öffnung 13 des Rahmens 4. Die beiden Bolzen 10 des zweiten Seitenteils 6 befinden sich
- wie in Fig. 1 ersichtlich - in beiden Querstreben 12, 12'. Erst im zusammengeklappten Zustand befindet sich der Bolzen 10 in der Querstrebe 12 und in der Öffnung 13 des Rahmens 4.

Um die Stapelbarkeit gleicher Container 1 zu gewährleisten, sind an jeder Ecke des Rahmens 4 besondere Füße 15 vorgesehen. Dadurch können, wie es in Fig. 2 dargestellt ist, baugleiche Container 1 gestapelt werden. Die Füße 15 sind derart geformt, dass sie den obersten Bereich der Seitenteile 5 des jeweils unten stehenden Containers 1 aufnehmen können. Vorzugsweise ist hierfür das aus Vierkantstahl gefertigte Seitenteil 5, 6, insbesondere der senkrecht angeordnete Vierkantstahl oben offen ausgeführt.

In einer weiterführenden Variante weist jeder Fuß 15 im Inneren einen nicht näher dargestellten Stempel auf, der in den geöffneten Vierkantstahl greift.

Aber auch in zusammengeklapptem Zustand können die Container 1 übereinander angeordnet und somit Platz sparend gestapelt werden. Dies ist in Fig. 6 dargestellt.

### Bezugszeichenliste

- 1: Verkaufcontainer, Container
- 2: Rollen
- 3: Boden
- 4: Rahmen
- 5: erstes Seitenteil
- 6: zweites Seitenteil
- 7: Verkaufsetage
- 8: Klappmechanismus
- 8.1: erster Klappmechanismus
- 8.2: zweiter Klappmechanismus
- 9: Scharnier
- 10: Sicherungsmittel, Bolzen
- 11: Ausnehmung
- 12: Querstrebe
- 12: weitere obere Querstrebe
- 13: Öffnung
- 14: Aufnahme
- 15: Fuß

## Patentansprüche

1. Fahrbarer Verkaufscontainer mit einem Boden (3) und mit Seitenteilen (5, 6), wobei ein erstes (5) und ein zweites Seitenteil (6) vorgesehen ist und wobei beide Seitenteile (5, 6) gegenüber voneinander angeordnet sind, **dadurch gekennzeichnet, dass** der Verkaufscontainer (1) für den Nichtgebrauch Platz sparend zusammenklappbar ist.

2. Fahrbarer Verkaufscontainer nach Anspruch 1, **dadurch gekennzeichnet, dass** jedes Seitenteil (5, 6) um 180° klappbar ist.

3. Fahrbarer Verkaufscontainer nach Anspruch 1, **dadurch gekennzeichnet, dass** jedes Seitenteil (5, 6) zum Klappen wenigstens einen Klappmechanismus (8) aufweist.

4. Fahrbarer Verkaufscontainer nach Anspruch 1, **dadurch gekennzeichnet, dass** der Klappmechanismus (8) durch wenigstens ein Scharnier (9) gebildet ist.

5. Fahrbarer Verkaufscontainer nach Anspruch 1, **dadurch gekennzeichnet, dass** jedes Seitenteil (5, 6) zweimal um 180° klappbar ist und zwei Scharniere (9) aufweist.

6. Fahrbarer Verkaufscontainer nach den Ansprüchen 1 oder 2, **dadurch gekennzeichnet, dass** das erste Seitenteil (5) in zusammengeklapptem Zustand unterhalb des zweiten Seitenteils (6) liegt.

7. Fahrbarer Verkaufscontainer nach den Ansprüchen 1 oder 2, **dadurch gekennzeichnet, dass** gleiche Container (1) übereinander stapelbar sind.
